(19) Europäisches Patentamt
European Patent Office
Office européen des brevets

(11) **EP 3 812 975 B1**

(12) **EUROPEAN PATENT SPECIFICATION**

(45) Date of publication and mention
of the grant of the patent:
**20.09.2023 Bulletin 2023/38**

(21) Application number: **19821642.6**

(22) Date of filing: **20.05.2019**

(51) International Patent Classification (IPC):
***G06N 20/00*** (2019.01)   ***G06F 21/56*** (2013.01)

(52) Cooperative Patent Classification (CPC):
**G06F 21/56; G06N 20/00**

(86) International application number:
**PCT/CN2019/087564**

(87) International publication number:
**WO 2019/242444 (26.12.2019 Gazette 2019/52)**

(54) **METHOD AND SYSTEM FOR TRAINING MACHINE LEARNING ENGINE AND RELATED DEVICE**

VERFAHREN UND SYSTEM ZUM TRAINIEREN EINER MASCHINENLERNMASCHINE UND
ZUGEHÖRIGE VORRICHTUNG

PROCÉDÉ ET SYSTÈME POUR L'ENTRAÎNEMENT D'UN MOTEUR D'APPRENTISSAGE
AUTOMATIQUE ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2018 CN 201810638258**

(43) Date of publication of application:
**28.04.2021 Bulletin 2021/17**

(73) Proprietor: **Sangfor Technologies Inc.
Shenzhen, Guangdong 518055 (CN)**

(72) Inventors:
• **WEI, Kaizhi
Shenzhen, Guangdong 518055 (CN)**
• **ZHANG, Mingxing
Shenzhen, Guangdong 518055 (CN)**

(74) Representative: **Müller Schupfner & Partner
Patent- und Rechtsanwaltspartnerschaft mbB
Bavariaring 11
80336 München (DE)**

(56) References cited:
CN-A- 104 978 522     CN-A- 106 295 337
CN-A- 106 778 241     CN-A- 108 062 478
US-A1- 2015 007 319   US-A1- 2016 292 418
US-A1- 2017 004 306   US-B1- 7 644 076
US-B1- 9 690 938

## Description

The present application claims priority to Chinese Patent Application No.201810638258.2, titled "METHOD AND SYSTEM FOR TRAINING MACHINE LEARNING ENGINE AND RELATED DEVICE", filed on June 20, 2018 with the China National Intellectual Property Administration.

## FIELD

The present disclosure relates to the field of machine learning, and in particular to a method and a system for training a machine learning engine, a computer-readable storage medium and a device for training a machine learning engine.

## BACKGROUND

Currently, the technology of big data and machine learning is a research hotspot in industry and academia. The technology of machine learning and big data is increasingly applied to information security, achieving good results. Malware detection technology based on machine learning has made a great progress, and a large number of companies, such as Cylance, providing malware detection products based on machine learning have emerged in the industry. The emerging companies are favored by VC and have achieved many good results.

In the conventional machine learning engines, information entropy of a software is determined as static features for the machine learning. Generally, the information entropy is extracted from main features of an executable file, and the extracted information entropy is used as static features to be inputted to the machine learning engine. However, the operation of extracting information entropy from the main features of the executable file is only performed on an import table, an export table and section information of the executable file, the import table, the export table and the section information are general features, thus the extracted sample features have coarse granularity. The machine learning based on the sample features according to the conventional technology will result in a poor effect in training the machine learning engine and a low recognition rate.

Therefore, how to stably extract the static features of the executable file to make the detection model generated by the machine learning engine have a recognition rate with strong robust is a problem currently required to be solved by those skilled in the art. Patent document US2017004306 represents the closest prior art.

## SUMMARY

A method and a system for training a machine learning engine, a computer-readable storage medium and a device for training a machine learning engine are provided according to the present disclosure, to stably extract static features of an executable file to make a detection model generated by a machine learning engine have a recognition rate with strong robust.

To solve the above technical problems, a method for training a machine learning engine is provided according to the present disclosure. The method includes:

obtaining an executable file, and dividing the executable file into multiple to-be-extracted parts based on a data directory of the executable file;

extracting information entropy features of all the to-be-extracted parts, and performing data transformation on the information entropy features to obtain static features; and

training a machine learning engine using the static features.

The dividing the executable file into multiple to-be-extracted parts based on a data directory of the executable file includes:

dividing the executable file into an executable file header part, an executable file section part, an executable file Overlay data part, and an executable file integral part based on the data directory of the executable file.

In an embodiment, the extracting information entropy features of all the to-be-extracted parts and performing data transformation on the information entropy features to obtain static features includes:

extracting the information entropy features of all the to-be-extracted parts, where the information entropy features are binary data;

calculating a proportion of each of characters in the binary data corresponding to the information entropy features to all the characters in the binary data, and obtaining an entropy flow of the information entropy features based on the proportion; and

performing a DCT transform or a DWT transform on the entropy flow to obtain the static features.

In an embodiment, the calculating a proportion of each of characters in the binary data corresponding to the information entropy features to all the characters in the binary data and obtaining an entropy flow of the information entropy features based on the proportion includes:

dividing the binary data corresponding to the information entropy features into a plurality of byte blocks, where each of the byte blocks includes 256 bytes;

for each of the byte blocks, calculating a byte block proportion p of each of characters in the byte block to all characters in the byte block, and calculating a entropy flow component S for each of bytes in the byte block by using the following equation:

$$S = \left| p \cdot \log ( p ) \right|;$$

and
accumulating all the entropy flow components to obtain the entropy flow.

In an embodiment, after obtaining the executable file, the method further includes:
determining a file format of the executable file based on general format information of the executable file; and selecting a feature extraction strategy based on the file format.

The extracting information entropy features of all the to-be-extracted parts includes: extracting the information entropy features of all the to-be-extracted parts based on the feature extraction strategy.

In an embodiment, the determining a file format of the executable file based on general format information of the executable file includes:

determining values of .Net MetaData Directory RVA and .Net MetaData Directory Size in the data directory of the executable file; and

determining, if the values of the .Net MetaData Directory RVA and the .Net MetaData Directory Size are not empty, that the file format of the executable file is .Net format.

In an embodiment, the dividing the executable file into multiple to-be-extracted parts based on a data directory of the executable file includes:
dividing the executable file into multiple to-be-extracted parts based on a section array of the executable file.

In an embodiment, after training a machine learning engine using the static features, the method further includes:

extracting, in a case that a suspicious software is detected, a target executable file of the suspicious software; and

inputting the target executable file into the trained machine learning engine to determine, by the trained machine learning engine, whether the target executable file is an executable file of a malware.

In an embodiment, the method further includes:

reporting, if it is determined by the trained machine learning engine that the target executable file is the executable file of the malware, software information of the suspicious software to perform manual detection on the suspicious software;

receiving a manual detection result, and determining whether the current determination by the trained machine learning engine is wrong based on the manual detection result; and

training, if the current determination by the trained machine learning engine is wrong, the machine learning engine using the target executable file as a new negative training sample.

A system for training a machine learning engine is further provided according to the present disclosure. The system includes a file division module, a static feature extraction module and a training module.

The file division module is configured to obtain an executable file and divide the executable file into multiple to-be-extracted parts based on a data directory of the executable file.

The static feature extraction module is configured to extract information entropy features of all the to-be-extracted parts and perform data transformation on the information entropy features to obtain static features.

The training module is configured to train a machine learning engine using the static features.

The file division module includes a file obtaining unit and a division unit.

The file obtaining unit is configured to obtain the executable file.

The division unit is configured to divide the executable file into an executable file header part, an executable file section part, an executable file Overlay data part, and an executable file integral part based on the data directory of the executable file.

In an embodiment, the static feature extraction module includes an information entropy feature extraction unit, an entropy flow calculation unit and a data transformation unit.

The information entropy feature extraction unit is configured to extract the information entropy features of all the to-be-extracted pars. The information entropy feature are binary data.

The entropy flow calculation unit is configured to calculate a proportion of each of characters in the binary data corresponding to the information entropy features to all the characters in the binary data and obtain an entropy flow of the information entropy features based on the proportion.

The data transformation unit is configured to perform a DCT transform or a DWT transform on the entropy flow to obtain the static features.

In an embodiment, the entropy flow calculation unit includes a division sub-unit, an entropy flow component calculation sub-unit and an entropy flow component accumulation unit.

The division sub-unit is configured to divide the binary data corresponding to the information entropy features into multiple byte blocks, where each of the byte blocks includes 256 bytes.

The entropy flow component calculation sub-unit is configured to, for each of the byte blocks, calculate a byte block proportion p of each of characters in the byte block to all characters in the byte block, and calculate a entropy flow component S for each of bytes in the byte block by using the following equation:

$$S = \left| p \cdot \log(p) \right|.$$

The entropy flow component accumulation unit is configured to accumulate all the entropy flow components to obtain the entropy flow.

In an embodiment, the system further includes an extraction strategy determination module.

The extraction strategy determination module is configured to determine a file format of the executable file based on general format information of the executable file, and select a feature extraction strategy based on the file format.

The static feature extraction module is configured to extract the information entropy features of all the to-be-extracted parts based on the feature extraction strategy, and perform data transformation on the information entropy features to obtain the static features.

In an embodiment, the extraction strategy determination module includes a file format determination unit and a strategy selection unit.

The file format determining unit is configured to determine values of .Net MetaData Directory RVA and .Net MetaData Directory Size in the data directory of the executable file, and determine, if the values of the .Net MetaData Directory RVA and the .Net MetaData Directory Size are not empty, that the file format of the executable file is .Net format.

The strategy selection unit is configured to select the feature extraction strategy based on the file format.

In an embodiment, the file division module is configured to obtain the executable file and divide the executable file into the multiple to-be-extracted parts based on a section array of the executable file.

In an embodiment, the system further includes an extraction module and a determination module.

The extraction module is configured to extract, in a case that a suspicious software is detected, a target executable file of the suspicious software.

The determination module is configured to input the target executable file into the trained machine learning engine to determine, by the trained machine learning engine, whether the target executable file is an executable file of a malware.

In an embodiment, the system further includes a reporting module and a secondary training module.

The reporting module is configured to report, if it is determined by the trained machine learning engine that the target executable file is the executable file of the malware, software information of the suspicious software to perform manual detection on the suspicious software.

The secondary training module is configured to receive a manual detection result, determine whether the current determination by the trained machine learning engine is wrong based on the manual detection result, and train, if the current determination by the trained machine learning engine is wrong, the machine learning engine using the target executable file as a new negative training sample.

A computer-readable storage medium storing a computer program is further provided according to the present disclosure. The computer program, when executed, performs the method for training a machine learning engine.

A device for training a machine learning engine is further provided according to the present disclosure. The device includes a memory and a processor. The memory stores a computer program. The processor is configured to execute the computer program to perform the method for training a machine learning engine.

A method for training a machine learning engine is provided according to the present disclosure. The method includes: obtaining an executable file and dividing the executable file into multiple to-be-extracted parts based on a data directory of the executable file; extracting information entropy features of all the to-be-extracted parts and performing data transformation on the information entropy features to obtain static features; and training a machine learning engine using the static features.

In the present disclosure, the executable file is divided into multiple to-be-extracted parts, information entropy features of all the to-be-extracted parts are extracted, an transformation is performed on the extracted information entropy features to obtain static features which are required in training the machine learning engine to train the machine learning engine. Compared with the method according to the conventional technology in which only the information entropy of the main features of the executable file are extracted, with the method in the present disclosure, the executable file is divided into multiple to-be-extracted parts based on the data directory and information entropy features of all the to-be-extracted parts are extracted. According to the conventional technology, since the information entropy features are extracted from the main features which are common features, the obtained static features have a coarse granularity. According to the present disclosure, the information entropy features are extracted from the entire executable file by dividing the executable file into multiple to-be-extracted parts and extracting the information entropy features of all the to-be-extracted parts, thus it can be ensured that the obtained static features have a fine granularity. With the method according to the present disclosure, the static features of the executable file can be stably extracted, so that the detection model generated by the machine learning engine has a recognition rate with strong robust. According to the present disclosure, a system for training a machine learning engine, a computer-readable storage medium and a device for training a machine learning engine are further provided, which have the above beneficial effects and are not repeated herein.

## BRIEF DESCRIPTION OF THE DRAWINGS

In order to illustrate the embodiments of the present disclosure or technical solutions in the conventional technology more clearly, drawings to be used in the description of the embodiments or the conventional technology are introduced simply hereinafter. It is apparent that the drawings described below only illustrate some embodiments of the present disclosure. For those skilled in the art, other drawings may be obtained according to these drawings without any creative work.

Figure 1 is a flow chart of a method for training a machine learning engine according to an embodiment of the present disclosure;
Figure 2 is a flow chart of extracting information entropy features and performing transformation on the extracted information entropy features to obtain static features in a method for training a machine learning engine according to an embodiment of the present disclosure;
Figure 3 is a flow chart of a method for training a machine learning engine according to another embodiment of the present disclosure;
Figure 4 is a flow chart of a method for training a machine learning engine according to another embodiment of the present disclosure; and
Figure 5 is a schematic structural diagram of a system for training a machine learning engine according to an embodiment of the present disclosure.

## DETAILED DESCRIPTION

In order to make the objectives, technical solutions and advantages of the embodiments of the present disclosure clearer, technical solutions according to the embodiments of the present disclosure are described clearly and completely hereinafter in conjunction with the drawings used in the embodiments of the present disclosure. It is apparent that the described embodiments are only some embodiments of the present disclosure rather than all embodiments. All other embodiments obtained by those skilled in the art based on the embodiments of the present disclosure without any creative work fall within the protection scope of the present disclosure.

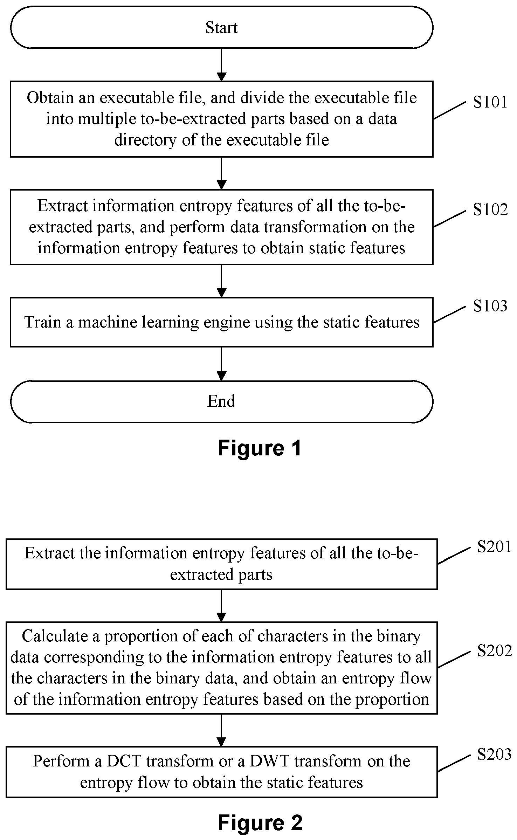

Reference is made to Figure 1, which is a flow chart of a method for training a machine learning engine according to an embodiment of the present disclosure.

The method includes the following steps S101 to S103.

In step S101, an executable file is obtained, and the executable file is divided into multiple to-be-extracted parts based on a data directory of the executable file.

In the embodiment, a method for training a machine learning engine is provided. Samples required for training the machine learning engine are static features of the executable file. The executable file is a file which may be loaded and executed by an operating system. In different operating system environments, the executable file is in different formats. For example, the executable file in a Windows system is a PE (portable executable) file, and the executable file in a system, such as Linux, Mac, and Android, has a file format corresponding to the system. The system where the executable file is executed is not limited here. According to the present disclosure, operations can be performed on the executable files in multiple systems.

In this step, the executable file is divided into multiple to-be-extracted parts based on the data directory of the executable file. Specifically, the executable file may be divided based on a section array in the structure of the executable file, and may be divided based on other data directories in the structure of the executable file, which is not limited herein. The executable file is divided into an executable file header part, an executable file section part, an executable file Overlay data part, and an executable file integral part based on the data directory of the executable file . In an embodiment, after general format information of the executable file is determined, the executable file may be divided into the to-be-extracted parts based on some parts or some structures of the general format information of the executable file.

In this step, the executable file is divided into multiple to-be-extracted parts based on the data directory. For each of the to-be-extracted parts, the information entropy features may be extracted with a specific feature extraction method, achieving information entropy features with a fine granularity, thereby increasing the stability of the static features.

In step S102, information entropy features of all the to-be-extracted parts are extracted, and data transformation is performed on the information entropy features to obtain static features.

In this step, based on that the executable file has been divided into multiple to-be-extracted parts in step S101, the information entropy features of all the to-be-extracted parts are extracted. The information entropy is an occurrence probability of a kind of information, and may be compared with the thermodynamic entropy. The information entropy features in the embodiment are occurrence probabilities of all kinds of information in the to-be-extracted parts. Generally, information in a computer is in the form of characters. The information entropy features in this step may be considered as feature values of the occurrence probabilities of the characters in the executable file.

It should be understood that, the samples used for training the machine learning engine are static features of the executable files. In this step, data transformation is performed on the information entropy features to obtain the static features, so that the machine learning engine is trained in a next step.

In step S103, the machine learning engine is trained using the static features.

In the embodiment, the executable file is divided into multiple to-be-extracted parts, information entropy features of all the to-be-extracted parts are extracted, and transformation is performed on the extracted information entropy features to obtain static features which are required in training the machine learning engine to train the machine learning engine. Compared with the method according to the conventional technology in which only the information entropy of the main features of the executable file are extracted, with the method in the embodiment, the executable file is divided into multiple to-be-extracted parts based on the data directory and information entropy features of all the to-be-extracted parts are extracted. According to the conventional technology, since the information entropy features are extracted from the main features which are common features, the obtained static features have a coarse granularity. According to the embodiment, the information entropy features are extracted from the entire executable file by dividing the executable file into multiple to-be-extracted parts and extracting the information entropy features of all the to-be-extracted parts, thus it can be ensured that the obtained static features have a fine granularity. With the method according to the embodiment, the static features of the executable file can be stably extracted, so that the detection model generated by the machine learning engine has a recognition rate with strong robust.

Reference is made to Figure 2, which is a flow chart of extracting information entropy features and performing transformation on the extracted information entropy features to obtain static features in a method for training a machine learning engine according to an embodiment of the present disclosure.

The extracting information entropy features and performing transformation on the extracted information entropy features to obtain static features includes but is not limited to the following steps.

In step S201, the information entropy features of all the to-be-extracted parts are extracted. The information entropy features are binary data.

In step S202, a proportion of each of characters in the binary data corresponding to the information entropy features to all the characters in the binary data is calculated, and an entropy flow of the information entropy features is obtained based on the proportion.

In the method according to the present disclosure, the information entropy may be compared with thermodynamic entropy, and the transmission of net entropy via information flow is called as entropy flow.

In this step, the entropy flow is calculated based on the overall information entropy features which are binary data. In an embodiment, the binary data may be divided into multiple blocks for calculating the entropy flow. For example, the binary data corresponding to the information entropy features is divided into multiple byte blocks, where each of the byte blocks includes 256 bytes. For each of the byte blocks, a byte block proportion p of each of characters in the byte block to all characters in the byte block is calculated, and an entropy flow component S for each of bytes in the byte block is calculated by using the equation:

$$S = \left| p \cdot \log( p ) \right|$$

All the entropy flow components are accumulated to obtain the entropy flow.

In step S203, a DCT transform or a DWT transform is performed on the entropy flow to obtain the static features.

The DCT (Discrete Cosine Transform) is a transform related to Fourier transform. The DWT (Discrete Walsh Transform) is a non-sinusoidal orthogonal transform with a Walsh function as a basic function. The static features may be obtained by performing the DCT transform or the DWT transform on the entropy flow.

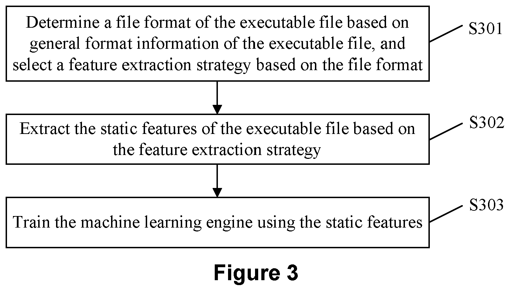

Reference is made to Figure 3, which is a flow chart of a method for training a machine learning engine according to another embodiment of the present disclosure.

The method includes the following steps S301 to S303.

In step S301, a file format of the executable file is determined based on general format information of the executable file, and a feature extraction strategy is selected based on the file format.

In this step, a subclass (such as, a .Net format, a Py2exe format, an auotit format and a Nsis format) of the executable file is determined based on the general format information of the executable file, and a feature extraction strategy (such as a strategy for determining which features are to be extracted) is determined based on the file format of the executable file.

The following are examples for determining the file format. In determining the file format of the executable file, it may be determined whether values of ".Net MetaData Directory RVA" and ".Net MetaData Directory Size" in the data directory of the executable file are empty. If the values of the ".Net MetaData Directory RVA" and the ".Net MetaData Directory Size" in the data directory of the executable file are not empty, the executable file is in .Net format. Alternatively, it may be detected whether the executable file includes a reference of a library while python is run. For example, it is detected whether an import table of the executable file includes python*.dll format or other formats ( whether including codes compiled with python or python codes) to determine whether the executable file is in Py2exe format. Executable files in different file formats may be determined in different ways, which are not limited here and may be configured by those skilled in the art according to actual application conditions.

In step S302, the static features of the executable file are extracted based on the feature extraction strategy.

Although the feature extraction strategies are different, the purpose for extracting the static features may be as follows: extracting certain structures and metadata from the executable file, reading and parsing the attributes of each of the structures and metadata according to a predefined structure, converting numeric data into a certain range, and performing operation, such as intercepting characters of a certain length or replacing special characters, on string data.

In step S303, the machine learning engine is trained using the static features.

With the technical solution according to the embodiment, static features having a fine granularity can be obtained to train the machine learning engine, improving the recognition rate of the machine learning engine. The operations performed in the embodiment may be combined with the operations performed in the first embodiment or the second embodiment, so that the information entropy features in the previous two embodiments are extracted based on the feature extraction strategy selected based on the file format according to the embodiment. That is, the information entropy features of the to-be-extracted parts are extracted based on the feature extraction strategy.

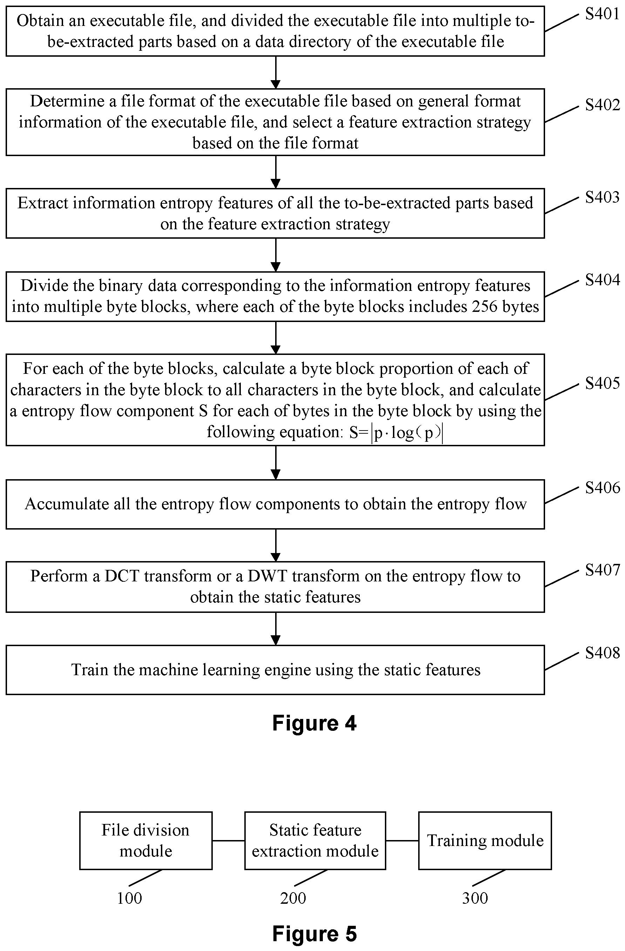

Reference is made to Figure 4, which is a flow chart of a method for training a machine learning engine according to another embodiment of the present disclosure.

In step S401, an executable file is obtained, and the executable file is divided into multiple to-be-extracted parts based on a data directory of the executable file.

In step S402, a file format of the executable file is determined based on general format information of the executable file, and a feature extraction strategy is selected based on the file format.

In step S403, information entropy features of all the to-be-extracted parts are extracted based on the feature extraction strategy. The information entropy features are binary data.

In step S404, the binary data corresponding to the information entropy features is divided into multiple byte blocks, where each of the byte blocks includes 256 bytes.

In step S405, for each of the byte blocks, a byte block proportion p of each of characters in the byte block to all characters in the byte block is calculated, and a entropy flow component S for each of bytes in the byte block is calculated by using the following equation:

$$S = \left| p \cdot \log(p) \right|$$

In step S406, all the entropy flow components are accumulated to obtain the entropy flow.

In step S407, a DCT transform or a DWT transform is performed on the entropy flow to obtain the static features.

In step S408, the machine learning engine is trained using the static features.

After training the machine learning engine using the static feature, the method may further include the following steps 1 to 4.

In step 1, in a case that a suspicious software is detected, a target executable file of the suspicious software is extracted.

In step 2, the target executable file is inputted into the trained machine learning engine to determine, by the trained machine learning engine, whether the target executable file is an executable file of a malware.

In step 3, if it is determined by the trained machine learning engine that the target executable file is the executable file of the malware, software information of the suspicious software is reported to perform manual detection on the suspicious software.

In step 4, a manual detection result is received, and it is determined whether the current determination by the trained machine learning engine is wrong based on the manual detection result. If the current determination by the trained machine learning engine is wrong, the machine learning engine is trained using the target executable file as a new negative training sample.

In the embodiment, after the machine learning engine is trained, the trained machine learning engine is used for detecting malware. Since the trained machine learning engine may have a low detection accuracy, in the embodiment, if the machine learning engine detects a malware, the malware is reported and a manual detection (that is, re-detection) is performed on the malware. If it is determined based on the manual detection that the suspicious software is not a malware, it indicates that the detection by the machine learning engine is wrong. The machine learning engine may be trained again using the target executable file of the suspicious software as a new negative training sample to improve the detection accuracy. Training samples include positive samples and negative samples. The positive samples correspond to executable files of malwares. The negative samples correspond to executable files of non-malwares.

Reference is made to Figure 5, which is a schematic structural diagram of a system for training a machine learning engine according to an embodiment of the present disclosure.

The system includes a file division module 100, a static feature extraction module 200 and a training module 300.

The file division module 100 is configured to obtain an executable file and divide the executable file into multiple to-be-extracted parts based on a data directory of the executable file.

The static feature extraction module 200 is configured to extract information entropy features of all the to-be-extracted parts and perform data transformation on the information entropy features to obtain static features.

The training module 300 is configured to train a machine learning engine using the static features.

In an embodiment, the file division module 100 includes a file obtaining unit and a division unit.

The file obtaining unit is configured to obtain the executable file.

The division unit is configured to divide the executable file into an executable file header part, an executable file section part, an executable file Overlay data part, and an executable file integral part based on the data directory of the executable file.

In an embodiment, the static feature extraction module 200 includes an information entropy feature extraction unit, an entropy flow calculation unit and a data transformation unit.

The information entropy feature extraction unit is configured to extract the information entropy features of all the to-be-extracted parts. The information entropy features are binary data.

The entropy flow calculation unit is configured to calculate a proportion of each of characters in the binary data corresponding to the information entropy features to all the characters in the binary data and obtain an entropy flow of the information entropy features based on the proportion.

The data transformation unit is configured to perform a DCT transform or a DWT transform on the entropy flow to obtain the static features.

In an embodiment, the entropy flow calculation unit includes a division sub-unit, an entropy flow component calculation sub-unit and a entropy flow component accumulation unit.

The division sub-unit is configured to divide the binary data corresponding to the information entropy features into multiple byte blocks, where each of the byte blocks includes 256 bytes.

The entropy flow component calculation sub-unit is configured to, for each of the byte blocks, calculate a byte block proportion p of each of characters in the byte block to all characters in the byte block, and calculate a entropy flow component S for each of bytes in the byte block by using the following equation:

$$S = \left| p \cdot \log ( p ) \right|.$$

The entropy flow component accumulation unit is configured to accumulate all the entropy flow components to obtain the entropy flow.

In an embodiment, the system further includes an extraction strategy determination module.

The extraction strategy determination module is configured to determine a file format of the executable file based on general format information of the executable file, and select a feature extraction strategy based on the file format.

The static feature extraction module is configured to extract the information entropy features of all the to-be-extracted parts based on the feature extraction strategy, and perform data transformation on the information entropy features to obtain the static features.

In an embodiment, the extraction strategy determination module includes a file format determination unit and a strategy selection unit.

The file format determining unit is configured to determine values of .Net MetaData Directory RVA and .Net MetaData Directory Size in the data directory of the executable file, and determine, if the values of the .Net MetaData Directory RVA and the .Net MetaData Directory Size are not empty, that the file format of the executable file is .Net format.

The strategy selection unit is configured to select the feature extraction strategy based on the file format.

In an embodiment, the file division module is configured to obtain the executable file and divide the executable file into the multiple to-be-extracted parts based on a section array of the executable file.

In an embodiment, the method further includes an extraction module and a determination module.

The extraction module is configured to extract, in a case that a suspicious software is detected, a target executable file of the suspicious software.

The determination module is configured to input the target executable file into the trained machine learning engine to determine by the trained machine learning engine whether the target executable file is an executable file of a malware.

In an embodiment, the method further includes a reporting module and a secondary training module.

The reporting module is configured to report, if it is determined by the trained machine learning engine that the target executable file is the executable file of the malware, software information of the suspicious software to perform manual detection on the suspicious software.

The secondary training module is configured to receive a manual detection result, determine whether the current determination by the trained machine learning engine is wrong based on the manual detection result, and train, if the current determination by the trained machine learning engine is wrong, the machine learning engine using the target executable file as a new negative training sample.

Since the embodiments of the system correspond to the embodiments of the method, for the embodiments of the system, references may be made to the description of the embodiments of the method, which are not repeated herein.

A computer-readable storage medium storing a computer program is further provided according to the present disclosure. The computer program, when executed, perform the method according to the above embodiments. The storage medium may include mediums capable of storing program codes, such as a USB flash disk, a removable hard disk, a read-only memory (ROM), a random access memory (RAM), a magnetic disk or an optical disk.

A device for training a machine learning engine is further provided according to the present disclosure. The device may include a memory and a processor. The memory stores a computer program. The processor is configured to execute the computer program stored in the memory to perform the method according to the above embodiments. The device for training a machine learning engine may include various network interfaces, a power supply and other components.

The embodiments in this specification are described in a progressive way, each of which emphasizes the differences from others, and the same or similar parts among the embodiments can be referred to each other. Since the system disclosed in the embodiments corresponds to the method therein, the description thereof is relatively simple, and for relevant matters references may be made to the description of the method. It should be noted that for those skilled in the art, many alterations and modifications may be made without departing from the principle of the present disclosure, and these alterations and modifications all fall within the scope of protection of the present disclosure.

It should be further noted that the relationship terminologies such as "first", "second" in the present disclosure are only used herein to distinguish one entity or operation from another, rather than to necessitate or imply that the actual relationship or order exists between the entities or operations. Furthermore, terms of "include", "comprise" or any other variants are intended to be non-exclusive. Therefore, a process, method, article or device including multiple components includes not only the components but also other components that are not enumerated, or also include the components inherent for the process, method, article or device. Unless expressively limited otherwise, the statement "comprising (including) one..." does not exclude the case that other similar components may exist in the process, method, article or device.

**Claims**

1. A method for training a machine learning engine, comprising:

   obtaining an executable file, and dividing the executable file into a plurality of to-be-extracted parts based on a data directory of the executable file;
   extracting information entropy features of all the to-be-extracted parts, and performing data transformation on the information entropy features to obtain static features; and

   training a machine learning engine using the static features;
   wherein the dividing the executable file into a plurality of to-be-extracted parts based on a data directory of the executable file comprises:
   dividing the executable file into an executable file header part, an executable file section part, an executable file Overlay data part, and an executable file integral part based on the data directory of the executable file.

2. The method according to claim 1, wherein the extracting information entropy features of all the to-be-extracted parts and performing data transformation on the information entropy features to obtain static features comprises:

   extracting the information entropy features of all the to-be-extracted parts, wherein the information entropy features are binary data;
   calculating a proportion of each of characters in the binary data corresponding to the information entropy features to all the characters in the binary data, and obtaining an entropy flow of the information entropy features based on the proportion; and
   performing a DCT transform or a DWT transform on the entropy flow to obtain the static features.

3. The method according to claim 2, wherein the calculating a proportion of each of characters in the binary data corresponding to the information entropy features to all the characters in the binary data and obtaining an entropy flow of the information entropy features based on the proportion comprises:

   dividing the binary data corresponding to the information entropy features into a plurality of byte blocks, wherein each of the byte blocks comprises 256 bytes;
   for each of the byte blocks, calculating a byte block proportion p of each of characters in the byte block to all characters in the byte block, and calculating a entropy flow component S for each of bytes in the byte block by using the following equation:

   $$S = \left| p \cdot \log(p) \right|;$$

   and
   accumulating all the entropy flow components to obtain the entropy flow.

4. The method according to claim 1, wherein after obtaining the executable file, the method further comprises:

determining a file format of the executable file based on general format information of the executable file, and selecting a feature extraction strategy based on the file format;

the extracting information entropy features of all the to-be-extracted parts comprises:

extracting the information entropy features of all the to-be-extracted parts based on the feature extraction strategy.

5. The method according to claim 4, wherein the determining a file format of the executable file based on general format information of the executable file comprises:

determining values of .Net MetaData Directory RVA and .Net MetaData Directory Size in the data directory of the executable file; and determining, if the values of the .Net MetaData Directory RVA and the .Net MetaData Directory Size are not empty, that the file format of the executable file is .Net format.

6. The method according to claim 1, wherein the dividing the executable file into a plurality of to-be-extracted parts based on a data directory of the executable file comprises:

dividing the executable file into a plurality of to-be-extracted parts based on a section array of the executable file.

7. The method according to any one of claims 1 to 6, wherein after training a machine learning engine using the static features, the method further comprises:

extracting, in a case that a suspicious software is detected, a target executable file of the suspicious software; and inputting the target executable file into the trained machine learning engine to determine, by the trained machine learning engine, whether the target executable file is an executable file of a malware.

8. The method according to claim 7, further comprising:

reporting, if it is determined by the trained machine learning engine that the target executable file is the executable file of the malware, software information of the suspicious software to perform manual detection on the suspicious software;
receiving a manual detection result, and determining whether the current determination by the trained machine learning engine is wrong based on the manual detection result; and
training, if the current determination by the trained machine learning engine is wrong, the machine learning engine using the target executable file as a new negative training sample.

9. A system for training a machine learning engine, comprising:

a file division module, configured to obtain an executable file and divide the executable file into a plurality of to-be-extracted parts based on a data directory of the executable file;
a static feature extraction module, configured to extract information entropy features of all the to-be-extracted parts and perform data transformation on the information entropy features to obtain static features; and
a training module, configured to train a machine learning engine using the static features;
wherein the file division module comprises:

a file obtaining unit, configured to obtain the executable file; and
a division unit, configured to divide the executable file into an executable file header part, an executable file section part, an executable file Overlay data part, and an executable file integral part based on the data directory of the executable file.

10. The system according claim 9, wherein the static feature extraction module comprises:

an information entropy feature extraction unit, configured to extract the information entropy features of all the to-be-extracted parts, wherein the information entropy features are binary data;
an entropy flow calculation unit, configured to calculate a proportion of each of characters in the binary data corresponding to the information entropy features to all the characters in the binary data and obtain an entropy flow of the information entropy features based on the proportion; and
a data transformation unit, configured to perform a DCT transform or a DWT transform on the entropy flow to obtain the static features.

11. The system according claim 9, further comprising:

an extraction strategy determination module, configured to determine a file format of the executable file based on general format information of the executable file, and select a feature extraction strategy based on the file format;
the static feature extraction module is configured to extract the information entropy features of all the to-be-extracted parts based on the feature extraction strategy, and perform data transformation on the information entropy features to obtain the static features.

12. The system according any one of claims 9 to 11, further comprising:

    an extraction module, configured to extract, in a case that a suspicious software is detected, a target executable file of the suspicious software; and
    a determination module, configured to input the target executable file into the trained machine learning engine to determine, by the trained machine learning engine, whether the target executable file is an executable file of a malware.

13. A computer-readable storage medium storing a computer program, wherein the computer program, when executed by a processor, causes the processor to perform the method for training a machine learning engine according to any one of claims 1 to 8.

**Patentansprüche**

1. Verfahren zum Trainieren einer Maschine zum maschinellen Lernen, umfassend:

    Erhalten einer ausführbaren Datei und Aufteilen der ausführbaren Datei in eine Vielzahl von zu extrahierenden Teilen basierend auf einem Datenverzeichnis der ausführbaren Datei;
    Extrahieren von Informationsentropiemerkmalen aller zu extrahierenden Teile und Durchführen einer Datentransformation an den Informationsentropiemerkmalen, um statische Merkmale zu erhalten; und
    Trainieren einer Maschine zum maschinellen Lernen unter Verwendung der statischen Merkmale;
    wobei das Aufteilen der ausführbaren Datei in eine Vielzahl von zu extrahierenden Teilen auf der Grundlage eines Datenverzeichnisses der ausführbaren Datei umfasst:
    Aufteilen der ausführbaren Datei in einen Kopfteil der ausführbaren Datei, einen Abschnitt der ausführbaren Datei, einen Overlay-Datenteil der ausführbaren Datei und einen integralen Teil der ausführbaren Datei auf der Grundlage des Datenverzeichnisses der ausführbaren Datei.

2. Verfahren nach Anspruch 1, wobei das Extrahieren von Informationsentropiemerkmalen aller zu extrahierenden Teile und das Durchführen einer Datentransformation an den Informationsentropiemerkmalen, um statische Merkmale zu erhalten, umfasst:

    Extrahieren der Informationsentropiemerkmale aller zu extrahierenden Teile, wobei die Informationsentropiemerkmale binäre Daten sind;
Berechnen eines Verhältnisses jedes der Zeichen in den binären Daten, die den Informationsentropiemerkmalen entsprechen, zu allen Zeichen in den binären Daten, und Erhalten eines Entropieflusses der Informationsentropiemerkmale auf der Grundlage des Verhältnisses; und
Durchführen einer DCT-Transformation oder einer DWT-Transformation an dem Entropiefluss, um die statischen Merkmale zu erhalten.

3. Verfahren nach Anspruch 2, wobei das Berechnen eines Verhältnisses jedes der Zeichen in den Binärdaten, die den Informationsentropiemerkmalen entsprechen, zu allen Zeichen in den binären Daten und das Erhalten eines Entropieflusses der Informationsentropiemerkmale basierend auf dem Verhältnis Folgendes umfasst

    Aufteilen der den Informationsentropiemerkmalen entsprechenden Binärdaten in eine Vielzahl von Byteblöcken, wobei jeder der Byteblöcke 256 Bytes umfasst;
    für jeden der Byteblöcke Berechnen eines Byteblockanteils p jedes der Zeichen in dem Byteblock zu allen Zeichen in dem Byteblock und Berechnen einer Entropieflusskomponente S für jedes der Bytes in dem Byteblock unter Verwendung der folgenden Gleichung:

$$S = \left| p \cdot \log\left( p \right) \right|;$$

    und
    Akkumulation aller Entropieflusskomponenten, um den Entropiefluss zu erhalten.

4. Verfahren nach Anspruch 1, wobei das Verfahren nach dem Erhalten der ausführbaren Datei weiterhin umfasst:

    Bestimmen eines Dateiformats der ausführbaren Datei auf der Grundlage allgemeiner Formatinformationen der ausführbaren Datei, und Auswählen einer Merkmalsextraktionsstrategie auf der Grundlage des Dateiformats;
    das Extrahieren von Informationsentropiemerkmalen aller zu extrahierenden Teile umfasst:
    Extrahieren der Informationsentropiemerkmale aller zu extrahierenden Teile auf der Grundlage der Merkmalsextraktionsstrategie.

5. Verfahren nach Anspruch 4, wobei das Bestimmen eines Dateiformats der ausführbaren Datei auf der Grundlage allgemeiner Formatinformationen der ausführbaren Datei umfasst:

Bestimmen von Werten von .Net MetaData Directory RVA und .Net MetaData Directory Size im Datenverzeichnis der ausführbaren Datei; und

Bestimmen, wenn die Werte des .Net MetaData Directory RVA und der .Net MetaData Directory Size nicht leer sind, dass das Dateiformat der ausführbaren Datei das .Net-Format ist.

6. Verfahren nach Anspruch 1, wobei das Aufteilen der ausführbaren Datei in eine Vielzahl von zu extrahierenden Teilen auf der Grundlage eines Datenverzeichnisses der ausführbaren Datei umfasst:
Aufteilen der ausführbaren Datei in eine Vielzahl von zu extrahierenden Teilen auf der Grundlage eines Abschnittsfeldes der ausführbaren Datei.

7. Verfahren nach einem der Ansprüche 1 bis 6, wobei das Verfahren nach dem Trainieren einer Maschine zum maschinellen Lernen unter Verwendung der statischen Merkmale ferner Folgendes umfasst:

in einem Fall, in dem eine verdächtige Software erkannt wird, Extrahieren einer ausführbaren Zieldatei der verdächtigen Software; und
Eingeben der ausführbaren Zieldatei in die trainierte Maschine zum maschinellen Lernen, um durch die trainierte Maschine zum maschinellen Lernen zu bestimmen, ob die ausführbare Zieldatei eine ausführbare Datei einer Malware ist.

8. Verfahren nach Anspruch 7, ferner umfassend:

Melden von Software-Informationen der verdächtigen Software, wenn von der trainierten Maschine zum maschinellen Lernen festgestellt wird, dass die ausführbare Zieldatei die ausführbare Datei der Malware ist, um eine manuelle Erkennung der verdächtigen Software durchzuführen;
Empfangen eines manuellen Erkennungsergebnisses und Bestimmen, ob die aktuelle Bestimmung durch die trainierte Maschine zum maschinellen Lernen falsch ist, basierend auf dem manuellen Erkennungsergebnis; und
Trainieren der Maschine zum maschinellen Lernen unter Verwendung der ausführbaren Zieldatei als ein neues negatives Trainingsmuster, wenn die aktuelle Bestimmung durch die trainierte Maschine zum maschinellen Lernen falsch ist.

9. System zum Trainieren einer Maschine zum maschinellen Lernen, umfassend:

ein Dateiunterteilungsmodul, das so konfiguriert ist, dass es eine ausführbare Datei erhält und die ausführbare Datei in eine Vielzahl von zu extrahierenden Teilen auf der Grundlage eines Datenverzeichnisses der ausführbaren Datei unterteilt;
ein Modul zur Extraktion statischer Merkmale, das so konfiguriert ist, dass es Informationsentropiemerkmale aller zu extrahierenden Teile extrahiert und eine Datentransformation an den Informationsentropiemerkmalen durchführt, um statische Merkmale zu erhalten; und
ein Trainingsmodul, das so konfiguriert ist, dass es eine Maschine zum maschinellen Lernen unter Verwendung der statischen Merkmale trainiert;
wobei das Dateiaufteilungsmodul umfasst:

eine Dateibeschaffungseinheit, die konfiguriert ist, um die ausführbare Datei zu erhalten; und
eine Unterteilungseinheit, die so konfiguriert ist, dass sie die ausführbare Datei in einen Kopfteil der ausführbaren Datei, einen Abschnitt der ausführbaren Datei, einen Overlay-Datenteil der ausführbaren Datei und einen integralen Teil der ausführbaren Datei basierend auf dem Datenverzeichnis der ausführbaren Datei unterteilt.

10. System nach Anspruch 9, wobei das Modul zur Extraktion statischer Merkmale Folgendes umfasst:

eine Informationsentropie-Merkmalsextraktionseinheit, die konfiguriert ist, um die Informationsentropiemerkmale aller zu extrahierenden Teile zu extrahieren, wobei die Informationsentropiemerkmale binäre Daten sind;
eine Entropiefluss-Berechnungseinheit, die konfiguriert ist, um ein Verhältnis jedes der Zeichen in den binären Daten, die den Informationsentropiemerkmalen entsprechen, zu allen Zeichen in den binären Daten zu berechnen und einen Entropiefluss der Informationsentropiemerkmale auf der Grundlage des Verhältnisses zu erhalten; und
eine Datentransformationseinheit, die konfiguriert ist, um eine DCT-Transformation oder eine DWT-Transformation an dem Entropiefluss durchzuführen, um die statischen Merkmale zu erhalten.

11. System nach Anspruch 9, ferner umfassend:

ein Extraktionsstrategie-Bestimmungsmodul, das so konfiguriert ist, dass es ein Dateiformat der ausführbaren Datei auf der Grundlage von allgemeinen Formatinformationen der ausführbaren Datei bestimmt und eine Merkmalsextraktionsstrategie auf der Grundlage des Dateiformats auswählt;

das Modul zur Extraktion statischer Merkmale ist so konfiguriert, dass es die Informationsentropiemerkmale aller zu extrahierenden Teile auf der Grundlage der Merkmalsextraktionsstrategie extrahiert und eine Datentransformation an den Informationsentropiemerkmalen durchführt, um die statischen Merkmale zu erhalten.

**12.** System nach einem der Ansprüche 9 bis 11, ferner umfassend:

ein Extraktionsmodul, das so konfiguriert ist, dass es in einem Fall, in dem eine verdächtige Software erkannt wird, eine ausführbare Zieldatei der verdächtigen Software extrahiert; und ein Bestimmungsmodul, das so konfiguriert ist, dass es die ausführbare Zieldatei in die trainierte Maschine zum maschinellen Lernen eingibt, um durch die trainierte Maschine zum maschinellen Lernen zu bestimmen, ob die ausführbare Zieldatei eine ausführbare Datei einer Malware ist.

**13.** Computerlesbares Speichermedium, das ein Computerprogramm speichert, wobei das Computerprogramm, wenn es von einem Prozessor ausgeführt wird, den Prozessor veranlasst, das Verfahren zum Trainieren einer Maschine zum maschinellen Lernen nach einem der Ansprüche 1 bis 8 durchzuführen.

**Revendications**

**1.** Procédé pour entraîner un moteur d'apprentissage automatique, comprenant les étapes consistant à :

obtenir un fichier exécutable, et diviser le fichier exécutable en une pluralité de parties à extraire sur la base d'un répertoire de données du fichier exécutable ;
extraire des caractéristiques d'entropie d'information de la totalité des parties à extraire, et effectuer une transformation de données sur les caractéristiques d'entropie d'information pour obtenir des caractéristiques statiques ; et
entraîner un moteur d'apprentissage automatique en utilisant les caractéristiques statiques ;
dans lequel l'étape consistant à diviser le fichier exécutable en une pluralité de parties à extraire sur la base d'un répertoire de données du fichier exécutable comprend :
de diviser le fichier exécutable en une partie entête de fichier exécutable, une partie section de fichier exécutable, une partie données de surcouche (overlay) de fichier exécutable, et une partie intégrale de fichier exécutable sur la base du répertoire de données du fichier exécutable.

**2.** Procédé selon la revendication 1, dans lequel l'étape consistant à extraire des caractéristiques d'entropie d'information de la totalité des parties à extraire et à effectuer une transformation de données sur les caractéristiques d'entropie d'information pour obtenir des caractéristiques statiques comprend :

d'extraire les caractéristiques d'entropie d'information de la totalité des parties à extraire, les caractéristiques d'entropie d'information étant des données binaires ;
de calculer une proportion de chacun des caractères dans les données binaires en correspondance avec les caractéristiques d'entropie d'information par rapport à la totalité des caractères dans les données binaires, et d'obtenir un flux d'entropie des caractéristiques d'entropie d'information sur la base de la proportion ; et
d'effectuer une transformée DCT ou une transformée DWT sur le flux d'entropie pour obtenir les caractéristiques statiques.

**3.** Procédé selon la revendication 2, dans lequel l'étape consistant à calculer une proportion de chacun des caractères dans les données binaires en correspondance avec les caractéristiques d'entropie d'information par rapport à la totalité des caractères dans les données binaires et à obtenir le flux d'entropie des caractéristiques d'entropie d'information sur la base de la proportion comprend :

de diviser les données binaires en correspondance avec les caractéristiques d'entropie d'information en une pluralité de blocs de bits, chacun des blocs de bits comprenant 256 bits ;
pour chacun des blocs de bits, de calculer une proportion p de blocs de bits de chacun des caractères dans le bloc de bits par rapport à la totalité des caractères dans le bloc de bits, et de calculer une composante S de flux d'entropie pour chacun des bits dans le bloc de bits en utilisant l'équation suivante :

$$S = | \, p \cdot \log(p) \, | \, ;$$

et
d'accumuler la totalité des composantes de flux d'entropie pour obtenir le flux d'entropie.

**4.** Procédé selon la revendication 1, dans lequel, après obtention du fichier exécutable, le procédé comprend en outre l'étape consistant à :

déterminer un format de fichier du fichier exécutable sur la base d'informations de format générales du fichier exécutable, et sélectionner une stratégie d'extraction de caractéristiques sur la base du format de fichier ;

l'étape consistant à extraire des caractéristiques d'entropie d'information de la totalité des parties à extraire comprenant :

d'extraire les caractéristiques d'entropie d'information de la totalité des parties à extraire sur la base de la stratégie d'extraction de caractéristiques.

**5.** Procédé selon la revendication 4, dans lequel l'étape consistant à déterminer un format de fichier du fichier exécutable sur la base d'informations de format générales du fichier exécutable comprend :

de déterminer des valeurs .Net MetaData Directory RVA et .Net MetaData Directory Size dans le répertoire de données du fichier exécutable ; et

déterminer, si les valeurs .Net MetaData Directory RVA et .Net MetaData Directory Size ne sont pas vides, que le format de fichier du fichier exécutable est un format .Net.

**6.** Procédé selon la revendication 1, dans lequel l'étape consistant à diviser le fichier exécutable en une pluralité de parties à extraire sur la base d'un répertoire de données du fichier exécutable comprend de :

diviser le fichier exécutable en une pluralité de parties à extraire sur la base d'une matrice de section du fichier exécutable.

**7.** Procédé selon l'une quelconque des revendications 1 à 6, dans lequel, après entraînement d'un moteur d'apprentissage automatique en utilisant les caractéristiques statiques, le procédé comprend en outre les étapes consistant à :

extraire, dans un cas où un logiciel suspect est détecté, un fichier exécutable cible du logiciel suspect ; et

entrer le fichier exécutable cible dans le moteur d'apprentissage automatique entraîné pour déterminer, via le moteur d'apprentissage automatique entraîné, si le fichier exécutable cible est un logiciel malveillant.

**8.** Procédé selon la revendication 7, comprenant en outre les étapes consistant à :

signaler, s'il est déterminé par le moteur d'apprentissage automatique entraîné que le fichier exécutable cible est le fichier exécutable du logiciel malveillant, des informations de logiciel du logiciel suspect pour effectuer une détection manuelle du logiciel suspect ;

recevoir un résultat de la détection manuelle, et déterminer si la détermination actuelle par le moteur d'apprentissage automatique entraîné est fausse sur la base du résultat de la détection manuelle ; et

entraîner, si la détermination actuelle par le moteur d'apprentissage automatique entraîné est fausse, le moteur d'apprentissage automatique en utilisant le fichier exécutable cible comme nouvel échantillon d'entraînement négatif.

**9.** Système d'entraînement d'un moteur d'apprentissage automatique, comprenant :

un module de division de fichier, configuré pour obtenir un fichier exécutable et diviser le fichier exécutable en une pluralité de parties à extraire sur la base d'un répertoire de données du fichier exécutable ;

un module d'extraction de caractéristiques statiques, configuré pour extraire des caractéristiques d'entropie d'information de la totalité des parties à extraire, et pour effectuer une transformation de données sur les caractéristiques d'entropie d'information pour obtenir des caractéristiques statiques ; et

un module d'entraînement, configuré pour entraîner un moteur d'apprentissage automatique en utilisant les caractéristiques statiques ;

dans lequel le module de division de fichier comprend :

une unité d'obtention de fichier, configurée pour obtenir le fichier exécutable ; et

une unité de division, configurée pour diviser le fichier exécutable en une partie entête de fichier exécutable, une partie section de fichier exécutable, une partie données de surcouche (overlay) de fichier exécutable, et une partie intégrale de fichier exécutable, sur la base du répertoire de données du fichier exécutable.

**10.** Système selon la revendication 9, dans lequel le module d'extraction de caractéristiques statiques comprend :

une unité d'extraction de caractéristiques d'entropie d'information, configurée pour extraire les caractéristiques d'entropie d'information de la totalité des parties à extraire, les caractéristiques d'entropie d'information étant des données binaires ;

une unité de calcul de flux d'entropie, configurée pour calculer une proportion de chacun des caractères dans les données binaires en correspondance avec les caractéristiques d'entropie d'information par rapport à la totalité des caractères dans les données binaires, et pour obtenir un flux d'entropie des caractéristiques d'entropie d'information sur la base de la proportion ;

et une unité de transformation de données, configurée pour effectuer une transformée DCT ou une transformée DWT sur le flux d'entropie pour obtenir les caractéristiques statiques.

11. Système selon la revendication 9, comprenant en outre :

un module de détermination de stratégie d'extraction, configuré pour déterminer un format de fichier du fichier exécutable sur la base d'informations de format générales du fichier exécutable, et pour sélectionner une stratégie d'extraction de caractéristiques sur la base du format de fichier ;

le module d'extraction de caractéristiques statiques étant configuré pour extraire les caractéristiques d'entropie d'information de la totalité des parties à extraire sur la base de la stratégie d'extraction de caractéristiques, et pour effectuer une transformation de données sur les caractéristiques d'entropie d'information pour obtenir les caractéristiques statiques.

12. Système selon l'une quelconque des revendications 9 à 11, comprenant en outre :

un module d'extraction, configuré pour extraire, dans un cas où un logiciel suspect est détecté, un fichier exécutable cible du logiciel suspect ; et un module de détermination, configuré pour entrer le fichier exécutable cible dans le moteur d'apprentissage automatique entraîné pour déterminer, via le moteur d'apprentissage automatique entraîné, si le fichier exécutable cible est un fichier exécutable d'un logiciel malveillant.

13. Support de stockage lisible par ordinateur stockant un programme d'ordinateur, dans lequel le programme d'ordinateur, quand il est exécuté par un processeur, amène le processeur à effectuer le procédé pour entraîner un moteur d'apprentissage automatique selon l'une quelconque des revendications 1 à 8.

```
              ┌─────────────────────────────────────┐
              │                Start                │
              └─────────────────────────────────────┘
                                │
                                ▼
  ┌─────────────────────────────────────────────────────┐
  │ Obtain an executable file, and divide the executable file │ ─── S101
  │   into multiple to-be-extracted parts based on a data      │
  │             directory of the executable file              │
  └─────────────────────────────────────────────────────┘
                                │
                                ▼
  ┌─────────────────────────────────────────────────────┐
  │ Extract information entropy features of all the to-be-    │ ─── S102
  │   extracted parts, and perform data transformation on the  │
  │  information entropy features to obtain static features    │
  └─────────────────────────────────────────────────────┘
                                │
                                ▼
  ┌─────────────────────────────────────────────────────┐
  │ Train a machine learning engine using the static features │ ─── S103
  └─────────────────────────────────────────────────────┘
                                │
                                ▼
              ┌─────────────────────────────────────┐
              │                 End                 │
              └─────────────────────────────────────┘
```

**Figure 1**

```
  ┌─────────────────────────────────────────────────────┐
  │ Extract the information entropy features of all the to-be- │ ─── S201
  │                    extracted parts                        │
  └─────────────────────────────────────────────────────┘
                                │
                                ▼
  ┌─────────────────────────────────────────────────────┐
  │ Calculate a proportion of each of characters in the binary │
  │ data corresponding to the information entropy features to all │ ─── S202
  │ the characters in the binary data, and obtain an entropy flow │
  │ of the information entropy features based on the proportion  │
  └─────────────────────────────────────────────────────┘
                                │
                                ▼
  ┌─────────────────────────────────────────────────────┐
  │ Perform a DCT transform or a DWT transform on the         │ ─── S203
  │       entropy flow to obtain the static features          │
  └─────────────────────────────────────────────────────┘
```

**Figure 2**

Determine a file format of the executable file based on general format information of the executable file, and select a feature extraction strategy based on the file format — S301

Extract the static features of the executable file based on the feature extraction strategy — S302

Train the machine learning engine using the static features — S303

**Figure 3**

| Obtain an executable file, and divided the executable file into multiple to-be-extracted parts based on a data directory of the executable file | S401 |

| Determine a file format of the executable file based on general format information of the executable file, and select a feature extraction strategy based on the file format | S402 |

| Extract information entropy features of all the to-be-extracted parts based on the feature extraction strategy | S403 |

| Divide the binary data corresponding to the information entropy features into multiple byte blocks, where each of the byte blocks includes 256 bytes | S404 |

| For each of the byte blocks, calculate a byte block proportion of each of characters in the byte block to all characters in the byte block, and calculate a entropy flow component S for each of bytes in the byte block by using the following equation: $S = |p \cdot \log(p)|$ | S405 |

| Accumulate all the entropy flow components to obtain the entropy flow | S406 |

| Perform a DCT transform or a DWT transform on the entropy flow to obtain the static features | S407 |

| Train the machine learning engine using the static features | S408 |

**Figure 4**

| File division module | Static feature extraction module | Training module |

100        200        300

**Figure 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810638258
- US 2017004306 A